# EUROPÄISCHE PATENTSCHRIFT

(11) **EP 1 257 363 B1**
(45) Veröffentlichungstag und Bekanntmachung des Hinweises auf die Patenterteilung: **12.11.2003**
(21) Anmeldenummer: 01925336.8
(22) Anmeldetag: 19.02.2001
(51) Int. Cl.: B01L 3/00

(54) **VORRICHTUNG ZUM FILTERN UND BESEITIGEN VON FLÜSSIGKEITEN**
DEVICE FOR FILTERING AND REMOVING FLUIDS
DISPOSITIF POUR FILTRER ET ELIMINER DES LIQUIDES

(30) Priorität: 22.02.2000 DE 10008023
(43) Veröffentlichungstag der Anmeldung: 20.11.2002
(60) Teilanmeldung: 03010843.5
(73) Patentinhaber: QIAGEN GmbH, 40724 Hilden (DE)
(72) Erfinder: LUTZE, Konstantin, CH-8634 Hombrechtikon (CH); COLLASIUS, Michael, 8634 Hombrechtikon (CH); FRIEDERICHS, Ulf, 8634 Hombrechtikon (CH)
(74) Vertreter: Leidescher, Thomas, Dr.
(86) Internationale Anmeldenummer: EP0101854
(87) Internationale Veröffentlichungsnummer: WO01062386

(56) Entgegenhaltungen:
- GB-A- 2 280 430
- US-A- 5 137 604
- US-A- 5 645 723
- US-A- 5 772 900

## Beschreibung

### Technisches Geblet

Die Erfindung betrifft eine Vorrichtung und ein Verfahren zum automatisierten Filtern und Beseitigen von Flüssigkeiten und Flüssigkeitsresten in einer Unterdruckkammer.

### Stand der Technik

In vielen Anwendungsgebieten der Technik, insbesondere in der Chemie, Biologie und beim Umweltschutz, ist es erforderlich, Flüssigkeiten zu analysieren, in ihre Bestandteile zu zerlegen oder in Reaktion mit anderen Substanzen zu bringen. Zu diesem Zweck werden Flüssigkeiten gefiltert, getrocknet, gewaschen, pipettiert und anderen Behandlungen unterworfen, wobei unter Flüssigkeit grundsätzlich jede Substanz, die in flüssiger Form vorliegt oder die sich in einer Flüssigkeit befindet, zu verstehen ist. Oft bestehen die Behandlungen aus einer langen Kette von Behandlungsabläufen, so daß es erforderlich ist, diese Prozeduren mit Hilfe von Robotern zu automatisieren.

So ist beispielsweise bereits seit einigen Jahren das System "BioRobot 9600" des Anmelders auf dem Markt, mit dem molekularbiologische Verfahrensabläufe wie z.B. das Filtern, Waschen und Eluieren von Nukleinsäuren oder das Isolieren von RNA und/oder DNA automatisch durchgeführt werden. Für diese Abläufe werden als Filtermodul bezeichnete Trägerkörper eingesetzt, die eine Vielzahl von in Matrixform angeordneten Behältnissen aufweisen. Diese Behältnisse haben oben eine Einlaßöffnung und weisen im unteren Teil eine Auslaßöffnung auf. In den Behältnissen befinden sich weiterhin Filterkörper in Form von geeigneten Membranen oder Filtern, die zum Binden der zu analysierenden Substanzen in den Flüssigkeitsproben geeignet sind.

So werden zum Beispiel zur Erzeugung von hochreinen DNA-Plasmiden mittels einer Einzelpipetiervorrichtung zunächst Zellkulturen in Suspension gegeben, lysiert und anschließend mittels einer Pipetiervorrichtung in die Behältnisse der Trägerplatte gegeben. Anschließend werden die Trägerplatten mit den gefüllten Behältnissen so auf eine Unterdruckkammer aufgesetzt, daß die Auslaßöffnungen der Behältnisse in die Unterdruckkammer hineinragen. Durch das Anlegen eines Unterdrucks in der Unterdruckkammer werden die Flüssigkeiten in den Behältnissen durch die Filterkörper in die Unterdruckkammer gesaugt. In den Filterkörpem bleiben dabei die zu analysierenden Bestandteile nebst anderen Bestandteilen der Flüssigkeitsproben hängen. Um die interessierenden Bestandteile der Flüssigkeitsproben zu erhalten, müssen daher zunächst die nicht benötigten Substanzen aus den Filterkörpern herausgewaschen werden. Hierzu werden die Waschlösungen unterschiedlicher Konzentrationen in die Behältnisse pipettiert. Mittels dieser Waschlösungen wird ein Teil der nicht interessierenden Bestandteile der Flüssigkeitsproben von den Filterkörpern abgelöst. Anschließend werden mit Hilfe einer Eluitionslösung die interessierenden Bestandteile aus den Filterkörpern herausgelöst und aufgefangen.

Die in den einzelnen Schritten verwendeten Lösungen können jedoch die im folgenden Schritt verwendete Lösung kontaminieren. So können sich z.B. nach einem Waschschritt an den Auslaßöffnungen der Behältnisse aus Flüssigkeitsresten der Waschlösung Tropfen bilden, die vor dem folgenden Elutionsschritt zu entfernen sind. Dazu wurden früher die Trägerkörper bzw. Mikrotitrationsplatten von Hand mehrfach auf einer Unterlage mit saugfähigem Material fallengelassen, um diese Tropfen abzuschütteln. Wie in WO 98/53912 beschrieben, wurde das Entfernen der Restflüssigkeiten durch Anlegen eines Vakuums automatisiert.

In diesem Apparat fließen die durch die Filter gesaugten Flüssigkeiten, der Schwerkraft folgend, gewöhnlich zu einem Abscheider ab. Don wird die Flüssigkeit gesammelt, so daß sie bei Bedarf wiederverwendet und/oder untersucht werden kann. Flüssigkeitsreste insbesondere im Filterkörperbereich oder an den Auslaßöffhungen der Behältnisse sind auf diese Weise jedoch nicht oder nur sehr langsam zu beseitigen. Der Trockenvorgang der Filterkörper und Auslaßöffnungen der Behältnisse dauert daher lang oder bleibt unvollständig. Es hat sich jedoch gezeigt, daß Flüssigkeitsreste weitgehendst beseitigt werden sollten, da sie die Reinheit der zu analysierenden Filterrückstände in den Behältnissen, die selber meist nur in kleinen Mengen vorhanden sind, beeinträchtigen und das chemische Verhalten verändern.

Aus dem Dokument US-A-5 137 604 sind bereits eine Vorrichtung und ein Verfahren zum Abscheiden von Lösungsmitteln aus biologischen Proben bekannt, wobei sich die Proben in einer Zentrifugenkammer unter Vakuum befinden. Das Vakuum setzt den Siedepunkt des Lösungsmittels der biologischen Proben herab, so daß dieses verdampft und abgepumpt werden kann, wobei es eine Kühlfalle in der Pumpleitung passiert, in der korrosive Anteile des Lösungsmittels abgeschieden werden, damit sie nicht die Pumpe, das Pumpenöl oder gasförmiges biologisches Material kontaminieren. Jedoch offenbart das Dokument US-A-5 137 604 keine zweite Leitung, mit deren Hilfe die Unterdruckkammer mit der Vakuumpumpe verbunden werden kann, so daß diese Unterdruckkammer nicht unter Umgehung der Kühlfalle evakuiert werden könnte.

### Darstellung der Erfindung

Der Erfindung liegt daher die Aufgabe zugrunde, eine Vorrichtung bereitzustellen, die zum einen das Filtern von Flüssigkeiten bei Unterdruck und das Sammeln der gefilterten Flüssigkeiten ermöglicht, zum anderen aber auch das Beseitigen von Flüssigkeiten, insbesondere von Flüssigkeitsresten im Filterkörperbereich oder an den Auslaßöffnungen der Behältnisse möglichst vollständig und in kurzer Zeit durchführen kann, um damit die nach dem Stand der Technik bekannten Probleme zu venneiden.

Zur Lösung dieser Aufgabe wird eine Vorrichtung zur Behandlung von Flüssigkeiten in einer Unterdruckkammer mit einer Vakuumpumpe und einem Abscheider vorgeschlagen, wobei die Unterdruckkammer mittels einer ersten Leitung mit dem Abscheider verbunden und zwischen Unterdruckkammer und Abscheider eine erste Schließvorrichtung angeordnet ist, und wobei die Unterdruckkammer mittels einer zweiten Leitung mit der Vakuumpumpe verbunden ist, so daß die Unterdruckkammer unter Umgehung des Abscheiders evakuiert werden kann.

Es hat sich gezeigt, daß z.B. der Filterkörper durch seine Kapillarwirkung eine relativ große Menge an Flüssigkeit speichert, die durch das angelegte Vakuum nicht beseitigt wird. Durch Evakuieren der Unterdruckkammer unter Umgehung des Abscheiders können auch diese Flüssigkeiten beseitigt werden.

Unter Flüssigkeiten ist dabei grundsätzlich jede Substanz zu verstehen, die in flüssiger Form vorliegt oder die sich in einer Flüssigkeit befindet. Insbesondere werden darunter chemische und/oder biologische Proben bzw. sich in Flüssigkeiten befindende chemische und/oder biologische Proben und die zur Behandlung chemischer und/oder biologischer Proben benötigte Substanzen gemeint.

Unter Behandlung von Flüssigkeiten in einer Unterdruckkammer sind verschiedene auf Flüssigkeiten und/oder Flüssigkeitsreste bezogene Tätigkeiten in einer Unterdruckkammer zu verstehen, wie z.B. eine Flüssigkeit durch einen Filter ziehen, Flüssigkeitreste durch Abpumpen oder Verdampfen beseitigen, was bevorzugt auch als Trocknung der Unterdruckkammer bezeichnet werden kann, sowie Flüssigkeiten in einem Gefäß sammeln bzw. Flüssigkeiten einen Weg zu einem Abscheider freimachen.

Unter Abscheider ist insbesondere eine Vorrichtung zu verstehen, die Flüssigkeiten auffangen und in einem Abscheidergefäß sammeln kann. Dabei kann das Abscheidegefäß bevorzugt groß genug sein, um einige 100 ml Flüssigkeit aufzunchmen. Das Auffangen wird z.B. dadurch erreicht, daß der Abscheider unterhalb einer zu sammelnden Flüssigkeit angeordnet ist, so daß die Flüssigkeit aufgrund der Schwerkraft in ein Abscheidergefäß fließt oder fällt; alternativ wird das Auffangen der Flüssigkeit auch durch Materialstrukturen erreicht, die dem Flüssigkeitsstrom, der z.B. durch eine Vakuumpumpe erzeugt ist, entgegenstehen, so daß sich die Flüssigkeiten an der Materialstruktur abscheiden und zum Abscheidergefäß fließen oder fällen. In einer bevorzugten Ausführung besteht der Abscheider aus einem geschlossenen Abscheidegefäß, das von oben kommend zwei Röhrchen aufweist, die in das Abscheidegefäß offen hineinragen. Das eine Röhrchen ist ein Zuflußrohr, durch das die Flüssigkeiten durch Schwerkraft und/oder Sog durch eine Vakuumpumpe in das Abscheidegefäß transportiert und gesammelt werden, das andere Röhrchen ist das Ausgangsrohr, an das eine Vakuumpumpe angeschlossen ist. Das Ausgangsrohr endet über dem Flüssigkeitsspiegel, so daß die im Abscheidegefäß gesammelten Flüssigkeiten nicht zu der Vakuumpumpe gelangen können. Bevorzugt ist dabei die Öffnung des Ausgangsrohres oberhalb der Öffnung des Eingangsrohres angeordnet. Aber auch andere Verfahren zur Abscheidung von Flüssigkeiten können bevorzugt verwendet werden. Es können auch mehrere Abscheider in verschiedenen Anordnungen an die Unterdruckkammer oder an den Leitungen angebracht sein.

Die Evakuierung der Unterdruckkammer ohne Abscheider erfolgt durch eine (oder auch mehrere) Vakuumpumpen, die an die Unterdruckkammer angeschlossen sind, wobei der Abscheider von der Unterdruckkammer oder der Vakuumpumpe getrennt ist. Die Trennung wird zweckmäßig durch eine Schließvorrichtung erreicht. Unter Schlicßvorrichtung ist z.B. eine Vorrichtung mit Eingang und Ausgang zu verstehen, die zwischen Durchlaß oder Sperrung umgeschaltet werden kann, Bevorzugte Schließvorrichtung ist z.B. ein vakuumtaugliches Sperrventil. Ist der Abscheider von der Unterdruckkammer so abgetrennt, daß es keine größeren mit der Unterdruckkammer in Verbindung stehenden Flüssigkeitsreservoirs in der Unterdruckkammer gibt, so kann mit der Vakuumpumpe schnell ein hoher Unterdruck erreicht werden, der verbliebene Flüssigkeitsreste schneller zum Verdampfen bringt.

Mit der beschriebenen Vorrichtung können, wenn der Abscheider an die Unterdruckkammer angeschlossen ist, Flüssigkeiten in den Abscheider geleitet werden und, wenn der Abscheider von der Unterdruckkammer abgetrennt ist, die Unterdruckkammer und andere darin angeordneten Vorrichtungen von Flüssigkeitsresten befreit werden.

In einer weiteren erfindungsgemäßen Ausführungsform weist die Vorrichtung eine erste Leitung auf, die die Unterdruckkammer über den Abscheider mit einer ersten Vakuumpumpe verbindet. Die Pumpe fördert das Transportieren der Flüssigkeiten in den Abscheider.

Vorteilhaft ist zwischen Abscheider und Unterdruckkammer und bevorzugt auch zwischen Abscheider und Vakuumpumpe eine Schließvorrichtung angeordnet, die wiederum z.B. ein vakuumtaugliches Sperrventil sein kann. Über die erste Leitung kann die Unterdruckkammer, unter Einbeziehung des Abscheiders, abgepumpt werden. Ist der Abscheider mit Flüssigkeit gefüllt, so verläuft der Evakuierungsprozeß langsam, da die im Abscheider liegende Flüssigkeit durch Verdampfen über lange Zeit Gas nachliefert. Solange die Flüssigkeit im Abscheider nicht vollständig verdampft ist, kann auch kein hoher Unterdruck erzielt werden. Durch die Schließvorrichtung wird dies vermieden.

Gemäß einer weiteren Ausführungsform weist die Vorrichtung eine zweite Leitung auf, die die Unterdruckkammer mit einer zweiten Vakuumpumpe verbindet. Da hier kein mit Flüssigkeit gefüllter Abscheider in der Leitung angebracht ist, können bei gleicher Pumpleistung mit dieser Leitung die Unterdruckkammer schnell evakuiert und die Flussigkeitsreste schnell beseitigt werden, vorrausgesetzt, daß der Abscheider durch die Schließvorrichtung von der Unterdruckkammer getrennt ist. Bevorzugt hat auch die zweite Leitung mindestens eine Schließvorrichtung, die dafür sorgt, daß im Filterungsprozeß keine Flüssigkeit von der Unterdruckkammer in die Vakuumpumpe gelangt.

Bevorzugt wird für die Vorrichtung anstatt zweier Vakuumpumpen nur eine Vakuumpumpe eingesetzt, um Kosten und Gewicht zu sparen. Die erste Leitung zwischen Abscheider und Vakuumpumpe und die zweite Leitung werden dabei bevorzugt durch ein Leitungs T-Stück zu einer Leitung zusammengelegt, bevor sie in den Ansaugstutzen der Vakuumpumpe münden. Bevorzugt werden auch die erste Leitung zwischen Abscheider und Unterdruckkammer und zweite Leitung, ebenfalls durch ein Leitungs T-Stück, zusammengelegt, um mit einer Leitung in die Unterdruckkammer zu münden.

Bevorzugt werden die erste und zweite Schließvorrichtung durch ein 3/2-Wege-Ventil ersetzt, um die Anzahl der anzusteuernden aktiven Komponenten zu reduzieren. Das 3/2-Wege-Ventil ist dabei so in das Leitungssystem eingebaut, daß der Eingang des 3/2-Wege-Ventils mit der Unterdruckkammer verbunden ist, während der erste der zwei Ausgänge des 3/2-Wege-Ventils zum Abscheider und der zweite Ausgang direkt zur Vakuumpumpe führt. Vorteilhaft ersetzt das 3/2-Wege-Ventil zwei Anschlüsse an die Unterdruckkammer bzw. das erste Leitungs T-Stück. Das 3/2-Wege-Ventil läßt sich in zwei Schalterpositionen schalten, wobei es in der ersten Schalterposition den Eingang mit dem ersten Ausgang verbindet und dabei den zweiten Ausgang versperrt, während es in der zweiten Schalterposition den Eingang mit dem zweiten Ausgang verbindet und den ersten Ausgang versperrt.

In einer weiteren Ausgestaltung der Erfindung werden vorteilhaft die weitere erste und weitere zweite Schließvorrichtung durch ein weiteres 3/2-Wege-Ventil ersetzt, um die Anzahl der anzusteuernden aktiven Komponenten zu reduzieren. Das weitere 3/2-Wege-Ventil ist dabei bevorzugt so in das Leitungssystem eingebaut, daß der Eingang des weiteren 3/2-Wege-Ventils mit der Vakuumpumpe verbunden ist, während der erste der zwei Ausgänge des weiteren 3/2-Wege-Ventils zum Abscheider und der zweite Ausgang am Abscheider vorbei zur Unterdruckkammer führt. Dies erlaubt die Verwendung einer Vakuumpumpe. Vorteilhaft ersetzt das weitere 3/2-Wege-Ventil auch das zweite Leitungs T-Stück. Das 3/2-Wege-Ventil läßt sich bevorzugt in zwei Schalterpositionen schalten, wobei es in der ersten Schalterposition den Eingang mit dem ersten Ausgang verbindet und dabei den zweiten Ausgang versperrt und in der zweiten Schalterposition den Eingang mit dem zweiten Ausgang verbindet und den ersten Ausgang versperrt.

In einer bevorzugten Ausführung ist die Vorrichtung eine Vorrichtung zum Filtern von Flüssigkeiten in einer Unterdruckkammer. Das Vakuum in der Unterdruckkammer dient bevorzugt dazu, Flüssigkeiten, die in Behältnissen mit Filterkörpem in die Einlaßöffnungen eingegeben worden sind, durch die Filterkörper zu saugen. Die Unterdruckkammer ist für diesen Zweck bevorzugt so eingerichtet, daß sie eine Öffnung nach oben hat, in die ein oder mehrere dieser Behältnisse mit zu filternden Flüssigkeiten in die Unterdruckkammer eingelassen werden können. Die obere Öffnung der Unterdruckkammer und die Behältnisse sind so eingerichtet, daß Behältnis und obere Öffnung gasdicht miteinander abschließen. Solange Flüssigkeit oberhalb der Filterkörper im Behältnis sieht, ist die Unterdruckkammer also weiterhin gasdicht abgeschlossen, so daß eine Vakuumpumpe einen Unterdrück in der Unterdruckkammer erzeugen kann. Dieser Unterdruck saugt die in den Behältnissen untergebrachten Flüssigkeiten durch die Filterköper, so daß ein schnelles Filtern ermöglicht ist. Erst wenn die Flüssigkeit in den Behältnissen vollständig durch die Filter gesaugt worden ist und die Filterung somit beendet ist, kann atmosphärische Luft durch die Filter in die Unterdruckkammer geraten.

Filtern ist hier in einem weiteren Sinne zu verstehen: es meint das Saugen von Flüssigkeiten in benannten Behältnissen durch die Filterkörper mit Hilfe eines Unterdrucks, wobei dieser Vorgang auch beim Waschen von Filterrückständen mit einer Lösung, insbesondere mit Ethanol, oder beim Eluieren von Filterrückständen mit einer Elutionslösung abläuft.

Beim Filtern werden die Schließvorrichtungen, insbesondere die Sperrventile und/oder die 3/2-Wege-Ventile der Leitungen bevorzugt so geschaltet, daß der Abscheider an die Unterdruckkammer angeschlossen ist und die Unterdruckkammer mit Abscheider evakuiert wird. Die durch die Filterkörper gesogene Flüssigkeit fließt so, durch Schwerkraft oder durch Pumpsog angetrieben, zum Abscheider. Dabei muß darauf geachtet werden, daß keine Flüssigkeit durch Sog oder Schwerkraft in die Vakuumpumpe gerät. Um das zu verhindern, wird entweder bevorzugt durch den Abscheider gepumpt, so daß die Flüssigkeit dort abgefangen wird, oder der Einlaß des Pumpstutzen in der Unterdruckkammer befindet sich an einem Ort, zu dem die Flüssigkeiten trotz Pumpsog nicht gelangen können.. Dabei werden die beiden 3/2-Wege-Ventile bevorzugt beide in die erste Schalterposition geschaltet, so daß mit dem Abscheider evakuiert wird.

Gemäß eines weiteren Aspekts ist die Vorrichtung eine Vorrichtung zum Beseitigen von Flüssigkeiten, insbesondere von Flüssigkeitsresten, die beim Filtern nicht in den Abscheider abgeflossen sind, sondern in den Filterkörpern oder an den Auslässen der Behältnisse als Tropfen hängengeblieben sind oder an den Oberflächen innerhalb der Unterdruckkammer zurückgeblieben sind. Da diese Flüssigkeitsreste, insbesondere in den Filterkörpern, eine Analyse verfälschen können, sind diese auf ein Minimum zu reduzieren. Bevorzugt wird mit Hilfe eines Ünterdrucks durch eine an die Unterdruckkammer angeschlossene Vakuumpumpe die Siedetemperatur der Flüssigkeit gesenkt, so daß die Flüssigkeit beschleunigt vergast. Um den Unterdruck zu maximieren wird bevorzugt ein Deckel auf die Unterdruckkammer aufgebracht, der die obere Öffnung der Unterdruckkammer gasdicht abschließt, da sonst die Kammer offen wäre. Das Gas wird durch die Vakuumpumpe abgesaugt.

Weiterhin erfolgt bevorzugt die Beseitigung von Flüssigkeiten dadurch, daß Schließvorrichtungen und Ventile den Abscheider von der Unterdruckkammer abtrennen und eine Vakuumpumpe, die nicht mit einem Abscheider verbunden ist, die Unterdruckkammer evakuiert- Da auf diese Weise der Abscheider nicht immer neues Gas durch verdampfende Flüssigkeit in die Unterdruckkammer nachliefern kann, kann der Unterdruck in der Kammer erhöht und damit die Siedetemperatur der Flüssigkeitsreste weiter gesenkt werden. Auf diese Weise erfolgt die Verdampfung der Restflüssigkeit schneller und rückstaudsloser. Eine rückstandslose Beseitigung der Restflüssigkeiten ist insbesondere erforderlich in den Behältnissen und Filterkörpem, da sich hier oft kleine Mengen von zu analysierenden Substanzen befinden, die durch Restflüssigkeiten verunreinigt werden würden und daher falsche Resultate liefern würden. Dabei werden für die Beseitigung der Flüssigkeiten die beiden 3/2-Wege-Ventile in die zweite Schalterposition geschaltet, so daß ohne Abscheider evakuiert wird.

Gemäß einer weiteren Ausführungsform ist vorteilhaft an die Unterdruckkammer oder an einer anderen geeigneten Stelle ein Belüftungsventil angeschlossen, so daß die Unterdruckkammer belüftet werden kann. Die Belüftung erfolgt z.B. nach einem Schritt zur Beseitigung von Flüssigkeiten, da für eine Beseitigung von Flüssigkeiten ein mehrfacher Zyklus von Abpumpen und Belüften sich als vorteilhaft herausgestellt hat. Zweckmäßigerweise ist zwischen Belüftungsventil und Unterdruckkammer ein Drosselventil angebracht, mit dem beim Belüften ein zu schneller Druckanstieg, der die Unterdruckkammer oder die Flüssigkeiten in der Unterdruckkammer beschädigen oder durcheinander bringen würde, vermieden werden kann. Bevorzugt ist an die Unterdruckkammer oder an eine der Leitungen ein Drucksensor angebracht, mit dessen Hilfe der Druck in der Unterdruckkammer überwacht werden kann.

Bevorzugt umfaßt die Vorrichtung eine zentrale Steuerung für Schließvorrichtungen und Sperrventile, 3/2-Wege-Ventile, Belüftungsventil und/oder Vakuumpumpen. Mit dieser Steuerung kann die Vorrichtung überwacht und bequem gesteuert werden. Insbesondere können Abläufe wie Filtern, Beseitigung von Flüssigkeit und Belüften automatisiert, reproduzierbar wiederholt und damit leichter optimiert werden. Auch Fehlbedienungen kommen bei einem vollautomatischen Ablauf kaum noch vor.

Weiterhin wird ein Verfahren zur Beseitigung von Flüssigkeiten in einer Unterdruckkammer mit den folgenden Schritten vorgeschlagen:
a) die Unterdruckkammer wird luftdicht abgeschlossen;
b) die Unterdruckkammer wird mit der Vakuumpumpe verbunden und der Abscheider wird abgetrennt;
c) die Vakuumpumpe wird eingeschaltet und die Unterdruckkammer wird abgepumpt.

Bevorzugt wird die Unterdruckkammer luftdicht abgeschlossen, um einen möglichst guten Unterdruck zu erreichen, was die Beseitigung der Flüssigkeitsreste deutlich beschleunigt. Bevorzugt wird das Verfahren angewendet, um die Filter mit den zu analysierenden Filterrückständen zu trocknen, d.h. wenn die Behältnisse innerhalb der Unterdruckkammer angeordnet sind. Um die Unterdruckkammer mit den darin angeordneten Behältnissen gasdicht abzuschließen, wird bevorzugt ein Deckel, der die Behältnisse überdeckt und gasdicht mit der Öffnung in der Unterdruckkammer abschließt, auf die Unterdruckkammer gesetzt.

Bevorzugt wird die Unterdruckkammer mit einer Vakuumpumpe verbunden und der Abscheider wird von der Unterdruckkammer und Vakuumpumpe abgetrennt. Bevorzugt wird dann die Vakuumpumpe eingeschaltet. Die Abwesenheit des Abscheiders von der zu evakuierenden Unterdruckkammer verbessert das Vakuum, da keine verdampfende Flüssigkeit aus dem Abscheider in die zu evakuierende Unterdruckkammer treten kann. Damit erhöht sich deutlich die Geschwindigkeit, mit der die zu beseitigenden Flüssigkeiten verdampfen und abgepumpt werden können.

Bevorzugt wird nach einer Zeit des Abpumpens die Unterdruckkammer belüftet. Dieser Schritt wird bevorzugt dann ausgeführt, wenn die Beseitigung der Flüssigkeiten durch einen mehrfach zu wiederholenden Zyklus aus Abpumpen und Belüften beschleunigt werden soll.

Bevorzugt wird in dem Verfahren Ethanol beseitigt, das eine bevorzugte Waschlösung für Nukleinsäuren und die Isolierung von Flüssigkeiten mit DNA oder RNA darstellt.

Bevorzugt wird zur Beseitigung der Flüssigkeiten die Unterdruckkammer durch Heizelemente oder die Heizplatte erwärmt, um die Verdampfung zu beschleunigen. Bevorzugt wird auf eine Temperatur oberhalb des Siedepunkts geheizt, was zur schnellstmöglichen Beseitigung der Flüssigkeiten führt. Da der Siedepunkt einer Flüssigkeit mit steigenden Unterdruck fällt, ermöglicht ein gutes Vakuum ein Sieden schon bei niedrigen Temperaturen.

Bevorzugt wird das Verfahren durch eine elektronische Einheit gesteuert, da dadurch die Temperatur in der Unterdurckkammer, die Zeitdauem des Pumpens und Zeitpunkte des Belüftens sowie die einzustellenden Heiztemperaturen in der Unterdruckkammer optimal und reproduzierbar geregelt und automatiseirt werden kann.

### Kurze Beschreibung der Zeichnungen

In den Zeichnungen sind Ausführungsbeispiele der Erfindungen dargestellt. Es zeigen:
- Fig. 1: Erfindungsgemäßer Aufbau der Vorrichtung zur Behandlung von Flüssigkeiten in der Unterdruckkammer, insbesondere zur Filterung und Beseitigung von Flüssigkeiten in der Unterdruckkammer mit elektronischer Steuerung;
- Fig.2 - Fig. 8: Weitere erfindungsgemäße Ausführungen der Vorrichtung zur Behandlung von Flüssigkeiten in einer Unterdruckkammer, insbesondere zur Filterung und Beseitigung von Flüssigkeiten in der Unterdruckkammer;
- Fig.9: Eine bevorzugte Ausführung einer Unterdruckkammer zur Behandlung von Flüssigkeiten, insbesondere zur Filterung, Waschen und Trocknung von Flüssigkeitsproben

### Ausführungen der Erfindung

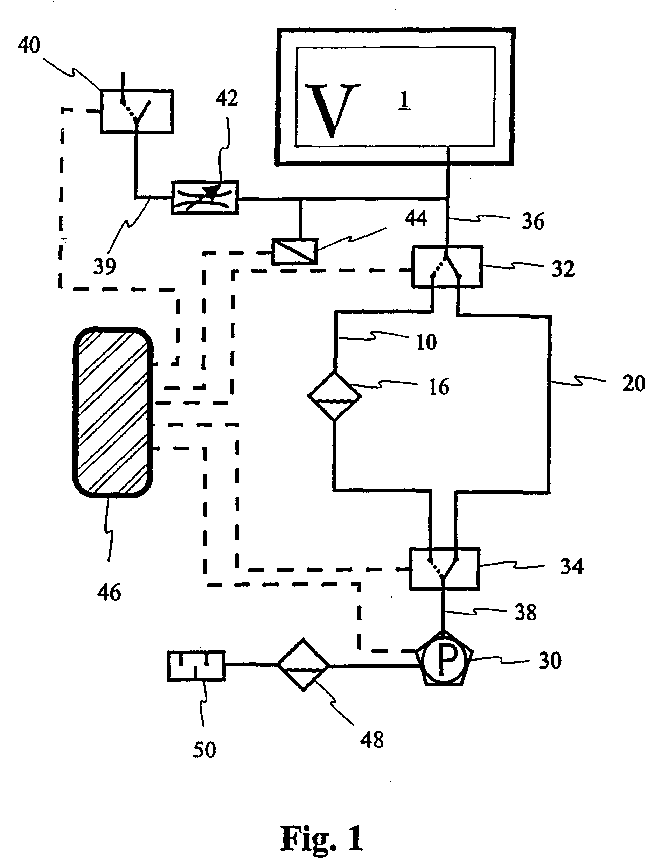

Fig. 1 zeigt schematisch eine bevorzugte Ausführung der Vorrichtung zur Behandlung von Flüssigkeiten in einer Unterdruckkammer, nämlich zur Filterung und Beseitigung von Flüssigkeiten. Die wesentlichen Elemente sind die Unterdruckkammer 1, der Abscheider 16 , die Vakuumpumpe 30 sowie das 3/2-Wege-Ventil 32 und das weitere 3/2-Wege-Ventil 34. Sind beide 3/2-Wege-Ventile in die erste Schalterposition geschaltet, so ist die Vakuumpumpe 30 ausschließlich über den Abscheider 16 mit der Unterdruckkammer verbunden. Sind beide 3/2-Wege-Ventile in die zweite Schalterposition geschaltet, so ist die Vakuumpumpe 30 ausschließlich unter Umgehung des Abscheiders mit der Unterdruckkammer verbunden.

Weitere Elemente der gezeigten Ausführung sind eine Belüftungsleitung 39 mit einem Belüftungsventil 40 und bevorzugt einem Drosselventil 42 zwischen Belüftungsventil 40 und Unterdruckkammer 1. Mit dem Drosselventil kann z.B. die Geschwindigkeit, mit der die Belüftung der Unterdruckkammer vor sich gehen soll, eingestellt werden. In der gezeigten Ausführung ist weiterhin ein Drucksensor 44 gezeigt, der an die Belüftungsleitung angeschlossen ist. Mit dem Drucksensor 44 wird der in der Unterdruckkammer herrschende Druck gemessen und überwacht. Grundsätzlich ist es nicht wesentlich, wie lang die Belüftungsleitung ist und wo sie in die Unterdruckkammer einmündet. Mit einem geeigneten Aufbau kann möglicherweise auch ganz auf eine Belüftungsleitung verrichtet werden, wenn es gelingt, Belüftungsventil und/oder Drosselventil und/oder Drucksensor direkt an das Unterdruckgehäuse anzubringen. Entscheidend ist, daß das Belüftungsventil die Unterdruckkammer belüften kann und bevorzugt der Druck in der Unterdruckkammer mit Hilfe des Drucksensors gemessen werden kann.

Weiterhin sind hinter der Vakuumpumpe 30 ein weiterer Abscheider 48 und ein Geräuschdämpfer 50 gezeigt. Der weitere Abscheider 48 hat die Funktion, die durch die Pumpe abgegebenen Luft von Feuchtigkeit zu befreien und ggf. die durch die Vakuumpumpe nach hinten abgegebene Luft zu filtern.

Schließlich ist die elektronische Regelung 46 gezeigt, die die aktiven Komponenten des Systems, vor allem 3/2-wege-Ventile, Belüftungsventil, Pumpe und Drucksensor, liest und/oder regelt. Die elektronische Regelung 46 ist jedoch nicht nur auf die gezeigten Komponenten begrenzt; so können mit der Steuereinheit auch die Temperatur in der Unterdruckkammer geregelt oder das Abheben und Aufsetzen des Deckels 66 auf die Unterdruckkammer veranlaßt werden. Mit der elektronischen Steuerung kann so der Flüssigkeitsbehandlungsablauf, also z.B. eine hintereinander verlaufende Filter- oder Trockenprozedur, automatisiert und optimiert werden. Dies ist nicht nur ein Zeitgewinn, sondern ermöglicht größtmögliche Reproduzierbarkeit und Fehlerfreiheit bezüglich der Bedienung.

Fig. 1 zeigt eine bevorzugte Ausführung der Vorrichtung zum Behandeln von Flüssigkeiten in einer Unterdruckkammer. Durch Schalten der beiden 3/2-Wege-Ventile auf die erste Schalterposition kann man in der Unterdruckkammer 1 einen Unterdruck erzeugen, der z.B. zum Filtern benutzt wird, und die Flüssigkeit zum Abscheider 16 führen.

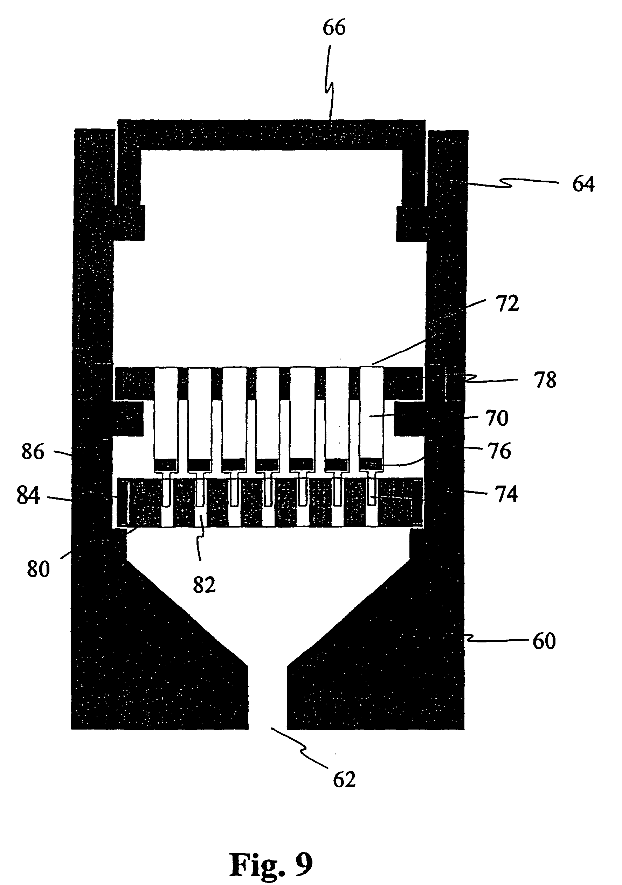

Sind beide 3/2-Wege-Ventile in Fig.1 in die zweite Schalterposition geschaltet, so können keine größeren Flüssigkeitsmengen aufgenommen werden, da die Flüssigkeiten dann leicht zur Vakuumpumpe 30 gelangen und die Vakuumpumpe 30 beschädigen können. Diese Schalterposition ist jedoch für die Beseitigung von Flüssigkeitsresten oder Trocknung der Unterdruckkammer 1 vorgesehen. In dieser Schalterposition ist der Abscheider 16 von der Unterdruckkammer abgetrennt, was das Evakuieren deutlich erleichtert, da vom Abscheider 16 keine verdampfte Flüssigkeit in die Unterdruckkammer 1 mehr gelangen kann. Weiterhin ist (wie in Figur 9 gezeigt) in einer bevorzugten Ausführung in dieser Schalterposition der Deckel 66 auf das Unterdruckgehäuse gasdicht aufgesetzt, so daß die Unterdruckkammer, bis auf den Abfluß 62, gasdicht abgedichtet ist. In der beschriebenen Ausführung kann der Druck so z.B. auf etwa 30 mbar reduziert werden, was etwa eine Größenordnung besser ist als wenn man mit angeschlossenem Abscheider evakuiert. Durch den so reduzierten Druck sinkt der Siedepunkt von Flüssigkeiten, so daß die z.B von einer Filterung verbliebenen Flüssigkeitsreste an den Filterkörpern 76 der Behältnisse 70 oder an anderen Oberflächen in der Unterdruckkammer deutlich schneller verdampfen und durch die Vakuumpumpe 30 abgepumpt werden können. Die bessere Trocknung führt direkt zu besseren Resultaten, wenn es z.B. darum geht, Filterrückstände in möglichst reiner Form zu erhaiten: z. B. gelingt es, durch die rückstandslosere Beseitigung der Waschlösung Ethanol im Waschprozeß zur Isolierung von Nukleinsäuren eluierte Nukleinsäuren mit einem Restethanolanteil von weniger als 0.5% zu erhalten.

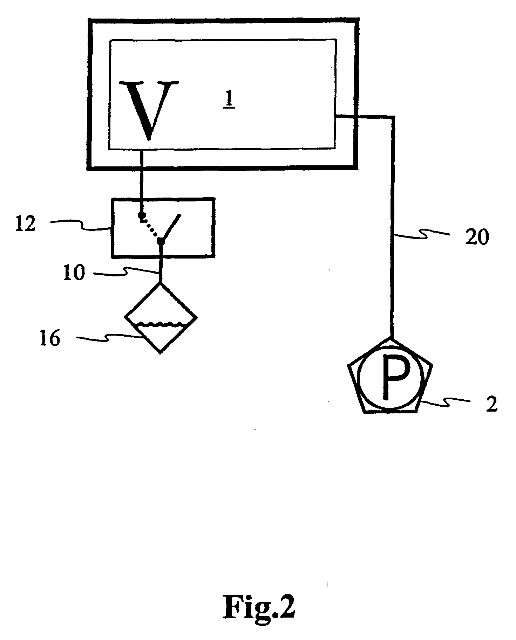

Fig. 1 ist eine bevorzugte Ausführung der erfindungsgemäßen Vorrichtung. Weitere Ausführungen sind in den Figuren 2 bis 8 gezeigt. Fig. 2 zeigt eine Ausführung eines minimalen Aufbaus, mit dem sowohl bei Unterdruck gefiltert als auch unter Umgehung des Abscheiders getrocknet werden kann. Ist die erste Schließvorrichtung 12 auf Durchlaß geschaltet, so kann gefilterte Flüssigkeit, durch Schwerkraft geleitet, in den unterhalb der Filterkörper liegenden Abscheider 16 fließen. Der Unterdruck für die Filterung wird durch die Vakuumpumpe 2, die mit einer Leitung 20 an die Unterdruckkammer 1 angeschlossen ist, bereitgestellt. In diesem Aufbau muß darauf geachtet werden, daß die Leitung 20 vor den durch die Filterkörper tretenden Flüssigkeiten geschützt ist, damit keine Flüssigkeit in die Vakuumpumpe geraten kann.

An dieser Stelle sei stellvertretend für alle anderen schematische Figuren 1 bis 8 gesagt, daß diese Figuren nicht festlegen, in welcher geometrischen Weise die erste Leitung 10 und die zweite Leitung 20 an die Unterdruckkammer angeschlossen sind. Sie können nebeneinander oder auch seitlich an der Unterdruckkammer angeschlossen werden oder aber auch z.B. auch über ein T-Leitungsstück zusammengeführt an die Unterdruckkammer angeschlossen werden. Die zum Abscheider führende Leitung ist in der Regel mit dem Boden der Unterdruckkammer verbunden, um die sich am Boden anreichernden Flüssigkeiten zu entfernen. Bevorzugt ist der Boden der Kammer konisch zulaufend ausgeformt, welches das Ablaufen der Flüssigkeiten fordert. In diesem Fall ist der Ablauf zweckmäßig an der tiefsten Stelle angeordnet. Ein zweiter, am Boden angebrachter Ablauf ist dann technisch aufwendiger zu realisieren. Der zweite Ablauf, insbesondere der für Vakuumpumpe 2, kann dann vorteilhaft an der Seite angebracht werden, da so ein Eindringen der Flüssigkeit in diese Leitung erschwert wird. Bei der Art des Anschließens der ersten Leitung 10 und der zweiten Leitung 20 ist lediglich darauf zu achten, daß die Vorrichtung funktional keine Einschränkungen erleidet.

Soll die Unterdruckkammer 1 von Flüssigkeitsresten befreit werden, so wird die Sperrvorrichtung 12 gesperrt und bevorzugt ein Deckel gasdicht auf die Unterdruckkammer aufgesetzt. Wie in Fig. 1 beschrieben kann die Unterdruckkammer nun unter deutlich besseren Unterdruckwerten gepumpt werden., so daß die Flüssigkeitsreste schneller verdampfen und abgepumpt werden können. Für die Wahl der Schließvorrichtung 12 bestehen hier wie in allen anderen Figuren keine besonderen Einschränkungen; bevorzugt ist die Schließvorrichtung ein vakuumtaugliches und ein auf chemische Angriffe widerstandsfähig reagierendes Sperrventil. Bei aller Einfachheit dieses Aufbaus liegt ein wesentlicher Nachteil dieser Ausführung darin, daß der Abscheider ohne unterstützende Vakuumpumpe die Flüssigkeit abfangen und sammeln muß. Auch besteht die Gefahr, daß die Vakuumpumpe 2 trotz Vorsichtsmaßnahmen durch Flüssigkeiten verunreinigt wird, da sie durch keine Sperre vor den Flüssigkeiten geschützt werfen kann.

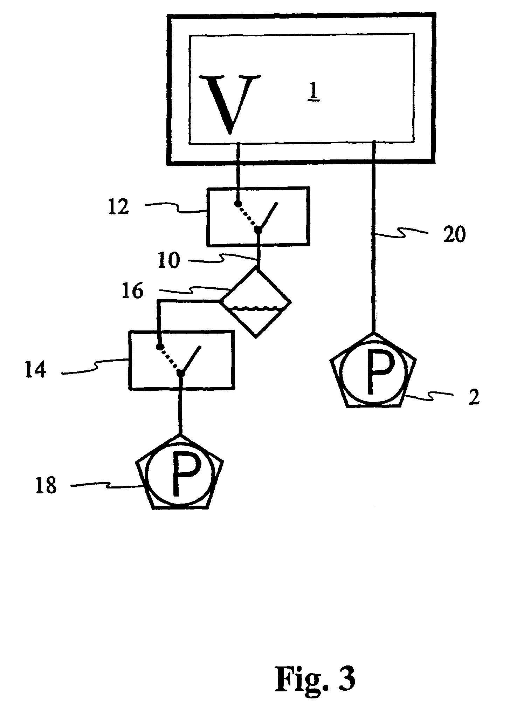

Fig. 3 zeigt eine Ausführung der Vorrichtung, die im Vergleich mit Fig. 2 durch eine weitere erste Schließvorrichtung 12 und eine weitere Pumpe 18, die an den Abscheider 16 angeschlossen ist, erweitert ist. Diese Vorrichtung hat gegenüber der Vorrichtung in Fig. 2 den Vorteil, daß zum Filtern die weitere Vakuumpumpe 18 den benötigten Unterdruck herstellt und nicht die ungeschützte Vakuumpumpe 2. So kann die Vakuumpumpe 2 beim Filtern ausgeschaltet werden, was die Gefahr der Schädigung der Pumpe durch eintretende Flüssigkeit reduziert. Vorteilhaft ist der Anschluß für die zweite Leitung an der Seite der Unterdruckkammer angebracht, um die Pumpe noch stärker vor eindringenden Flüssigkeiten zu schützen. Ein weiterer Vorteil dieser Ausführung ist der, daß die weitere Vakuumpumpe 18 dem Abscheider durch einen zusätzlichen Sog Unterstützung beim Abfangen und Sammeln der Flüssigkeit gibt.

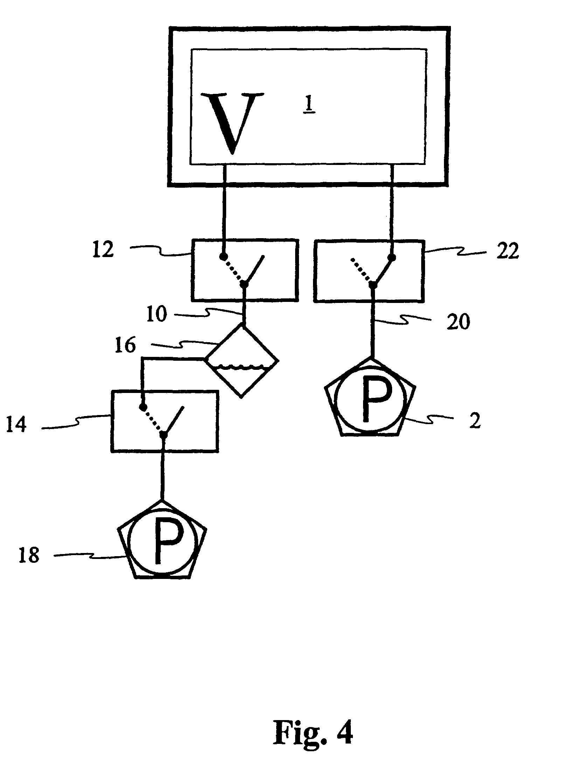

Die Ausführung von Fig. 4 unterscheidet sich bezüglich der Ausrührung von Fig. 3 um eine zweite Schließvorrichtung 22, die zwischen der Vakuumpumpe 2 und der Unterdruckkammer 1 eingebaut ist. Die Schließvorrichtung kann die Vakuumpumpe 2 vor der Feuchtigkeit schützen, die beim Filtern anderenfalls in die Leitung 20 geraten und die Pumpe zerstören kann. Bevorzugt sollte das Sperrventil an der Mündung der Leitung 20 in die Unterdruckkammer angebracht sein, damit bei gesperrter Schließvorrichtung die dort angesammelte Flüssigkeit wieder in die Unterdruckkammer zurückfließen kann, bevor sich die Schließvorrichtung, z.B. zum Trocknen, wieder öffnet.

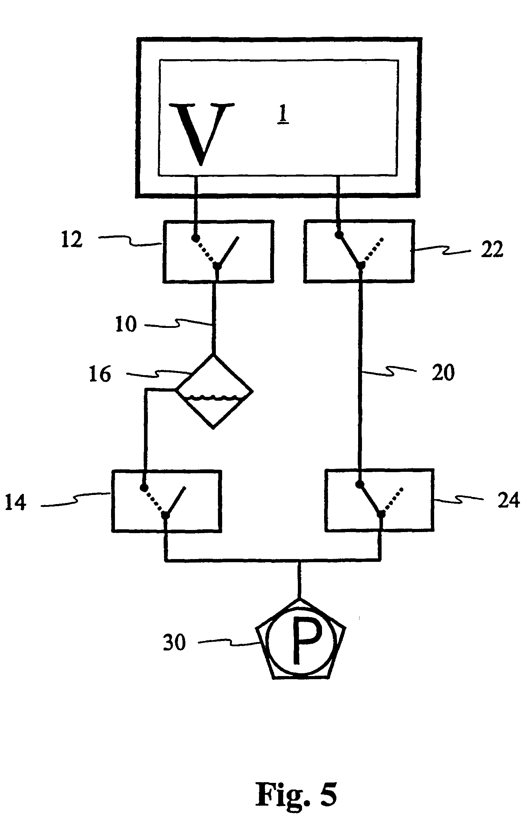

Fig.5 unterscheidet sich von Fig. 4 zum einen durch eine weitere zweite Schließvorrichtung 24 und dadurch, daß die Vakuumpumpe 2 und die weitere Vakuumpumpe 18 durch eine Vakuumpumpe 30 ersetzt sind. Dies kann z.B. durch ein Leitungs-T-Stück erreicht werden, mit dem die beiden Leitungen 10 und 20 zusammengeführt werden, um mit einer gemeinsamen unteren Leitung 38 in die Vakuumpumpe zu gehen. Aber auch andere Ausführungen sind denkbar. Die Ausführung erspart eine Vakuumumpe in der Vorrichtung, was Kosten, Gewicht, Geräusch und Komplexität des Aufbaus einspart.

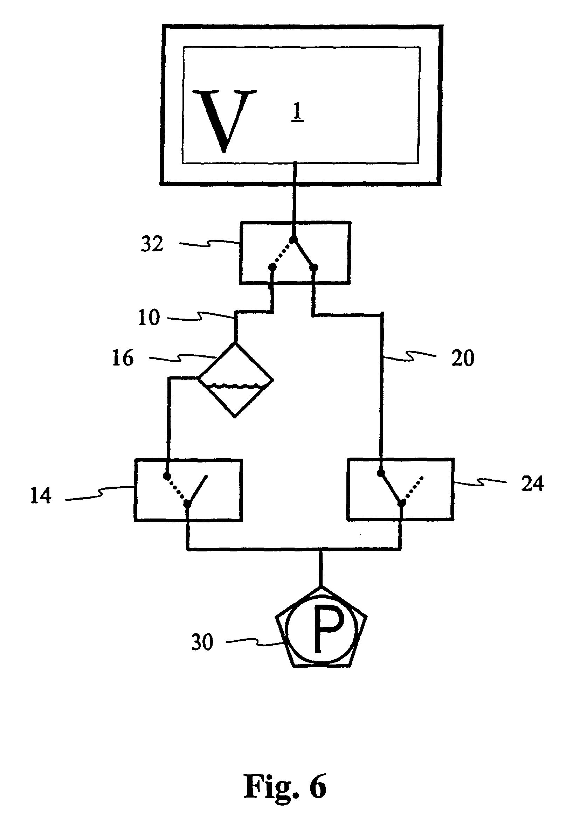

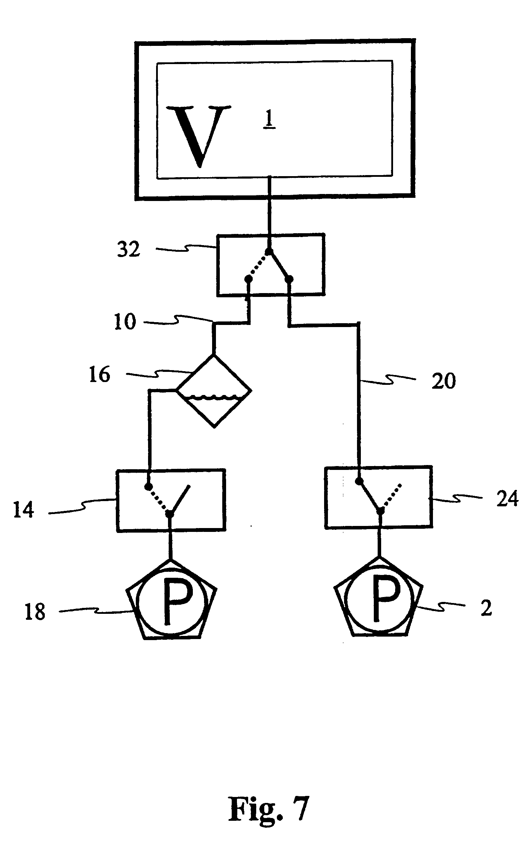

In Fig. 6 sind die beiden Schließvorrichtungen 12 und 22 zu einem gemeinsamen ersten 3/2-Wege-Ventil 32 zusammengefaßt. Dabei werden die Teile der ersten und zweiten Leitung 10 und 20, die zwischen Schließvorrichtung und Unterdruckkammer angeordnet sind, zu einer gemeinsamen oberen Leitung zusammengefaßt. Das erste 3/2-Wege-Ventil 32 ist so ausgelegt, daß entweder eine Verbindung von der Unterdruckkammer zur ersten Leitung 10 oder eine Verbindung von der Unterdruckkammer zur zweiten Leitung 20 hergestellt ist. Das Zusammenlegen der beiden schließvorrichtungen zu einem 3/2-Wege-Ventil vereinfacht den Aufbau, da es die Anzahl der Leitungen und der zu steuernden Komponenten im System reduziert. Es bietet aber auch den Vorteil, daß sich Flüssigkeit, die sich in einem Aufbau wie in Fig. 5 an der gesperrten Schließvorrichtung 22 sammelt und beim Öffnen der Schließvorrichtung schädlicherweise zur Vakuumpumpe gelangen kann, hier nicht ansammeln kann, da sie beim Filtern jederzeit in den Abscheider gelangen kann. Auch andere Ventile als das 3/2-Wege-Ventil sind für den Einsatz im Leitungssystem an dieser Stelle denkbar. Sie alle müssen aber jene zwei Schaltzustände enthalten, mit denen die Flüssigkeit und abzupumpende Gase entweder nur in den Abscheider 16 oder nur zur Pumpe 30 gelangen können. Fig. 7 unterscheidet sich von Fig. 6 dadurch, daß die eine Pumpe 30 wieder durch eine Vakuumpumpe 2 und eine weitere Vakuumpumpe 18 ersetzt ist.

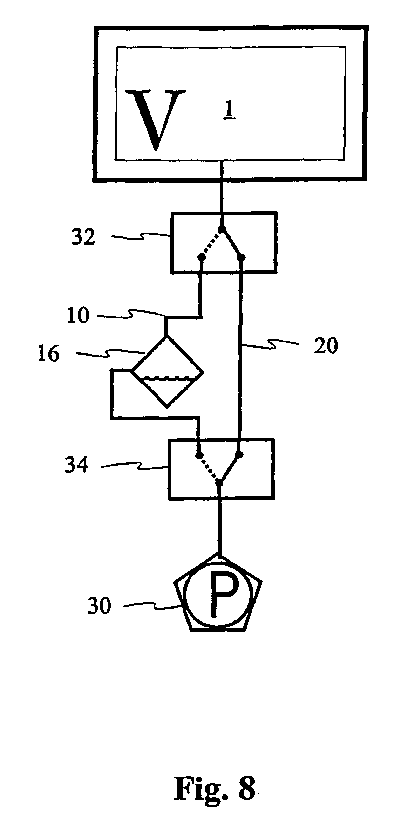

Die Ausführung von Fig. 8 ist schematisch identisch zu der in Fig. 1. In dieser Ausführung sind auch die beiden Schließvorrichtungen 14 und 24 aus Fig. 6 und Fig.7 durch ein weiteres 3/2-Wege-Ventil 34 ersetzt mit den gleichen Vorteilen wie für die Ausführung von Fig. 7. Außerdem ermöglicht es die Verwendung einer einzigen Pumpe. Alternativ könnte in Figur 7 die beiden sich an die Schließvorrichtungen anschließenden Leitungsabschnitte mittels eines T-Stückes zusammengefaßt und so in eine einzige Pumpe gefühlt werden.

Fig. 9 zeigt eine Ausführung einer Unterdruckkammer 1 zur Behandlung von Flüssigkeiten mit Heizplatte. Gezeigt sind ein Grundgehäuse 60 mit einem Abfluß 62. Auf das Grundgehäuse ist ein oberes Gehäuse 64 aufgesetzt, wobei die Auflageflächen zwischen Grundgehäuse 60 und oberem Gehäuse 64 im wesentlichen gasdicht miteinander abschließen. Der Deckel 66 auf dem oberen Gehäuse 64 schließt ebenfalls im wesentlichen gasdicht mit dem oberen Gehäuse 64 ab, so daß das Gesamtgehäuse der Unterdruckkammer 1 mit Grundgehäuse 60, oberem Gehäuse 64 und Deckel 66 bis auf den Abfluß 62 im wesentlichen gasdicht abgeschlossen ist. In einer bevorzugten Ausführung ist in der Unterdruckkammer 1 eine Trägerplatte 78 untergebracht, die Behältnisse 70 mit Einlaßöffnungen 72, Filterkörpern 76 und Auslaßöffhuogen 74 aufnimmt. In einer bevorzugten Ausführung sind diese Behältnisse fest mit der Tragerplatte 78 verbunden und die Trägerplatte horizontal auf einer Abstützstruktur des Grundgehäuses 60 aufgesetzt. Auf diese Weise kann eine Flüssigkeit in die Einlaßöffnung 72 gegeben und durch die Filterkörper gesaugt werden, wenn am Abfluß durch eine Vakuumpumpe ein Unterdruck erzeugt wird. Weiterhin ist eine Heizplatte 80 mit Löchern gezeigt, in die bevorzugt die Behältnisse mit den Auslaßöffnungen 74 hineinragen. Bevorzugt können die Behältnisse auch bis zu den Filterkörpern oder weiter in die Löcher der Heizplatte hineinragen. Auf diese Weise ist ein schnelles Trocknen von den in den Filterkörpern 76 und Auslaßöffnungen 74 haftenden Flüssigkeitsresten gewährleistet. Die Heizplatte mit Löchern ermöglicht so z.B. ein schnelles Trocknen nach einem Waschvorgang mit einer Waschlösung wie Ethanol. Außerdem kann durch die Heizplatte 80 eine feste Temperatur eingestellt werden, um gewisse chemische Prozesse in den Behältnissen in vorteilhafter Weise zu unterstützen.

Die in Figur 9 gezeigte Unterdruckkammer I wird auch zur Filterung verwendet. Dazu wird Deckel 60 entfernt und die mit Behältnissen versehene Trägerplatte auf im oberen Teil des oberen Gehäuses 64 befindliche Stützen aufgelegt. Eine z.B. dort befindliche Dichtung sorgt für einen gasdichten Abschluß. In den Behältnissen befinden sich oberhalb des Filters biologische Proben in Flüssigkeit. Durch Betreiben einer an Abfluß 62 angeschlossenen Vakuumpumpe wird der Innenraum einem Unterdruck ausgesetzt, um die Flüssigkeit durch den Filterkörper 76 strömen zu lassen. Die durch die Filterkörper 76 gesaugte Flüssigkeit wird durch Schwerkraft und durch Vakuumpumpensog zum Abfluß 62 geführt, von wo sie zum Abscheider 16 gelangt.

### Bezugszeichenliste

- 1: Unterdruckkammer
- 2: Vakuumpumpe

- 10: erste Leitung
- 12: erste Schließvorrichtung
- 14: weitere erste Schließvorrichtung
- 16: Abscheider
- 18: weitere Vakuumpumpe

- 20: zweite Leitung
- 22: zweite Schließvorrichtung
- 24: weitere zweite Schließvorrichtung

- 30: gemeinsame Vakuumpumpe
- 32: erstes 3/2 Wegeventil
- 34: weiteres 3/2 Wegeventil
- 36: gemeinsame obere Leitung
- 38: gemeinsame untere Leitung
- 39: Belüftungsleitung

- 40: Belüftungsventil
- 42: Drosselventil
- 44: Drucksensor
- 46: elektronische Steuerung
- 48: weiterer Abscheider
- 50: Geräuschdämpfer

- 60: Grundgehäuse
- 62: Abfluß
- 64: Oberes Gehäuse
- 66: Deckel

- 70: Behältnis
- 72: Einlaßöffnung
- 74: Auslaßöffnung
- 76: Filterkörper
- 78: Trägerplatte

- 80: Heizplatte
- 82: Löcher
- 84: erstes Heizband
- 86: zweites Heizband

## Patentansprüche

1. Vorrichtung zum Filtern und Beseitigen von Flüssigkeiten in einer Unterdruckkammer, mit einer Vakuumpumpe und einem Abscheider,
wobei die Unterdruckkammer mittels einer ersten Leitung mit dem Abscheider verbunden ist und zwischen Unterdruckkammer und Abscheider eine erste Schließvorrichtung angeordnet ist,
und wobei die Unterdruckkammer mittels einer zweiten Leitung mit der Vakuumpumpe verbunden ist,
so daß die Unterdruckkammer unter Umgehung des Abscheiders evakuiert werden kann.

2. Vorrichtung nach Anspruch 1,
**dadurch gekennzeichnet, daß**
die Unterdruckkammer über den Abscheider mit einer weiteren Vakuumpumpe verbunden ist.

3. Vorrichtung nach Anspruch 2,
**dadurch gekennzeichnet, daß**
zwischen Abscheider und weiterer Vakuumpumpe eine weitere erste Schließvorrichtung angeordnet ist.

4. Vorrichtung nach einem der vorherigen Ansprüche,
**dadurch gekennzeichnet, daß**
in der zweiten Leitung zwischen Unterdruckkammer und Vakuumpumpe eine zweite Schließvorrichtung angeordnet ist.

5. Vorrichtung nach Anspruch 4,
**dadurch gekennzeichnet, daß**
in der zweiten Leitung eine weitere zweite Schließvorrichtung angeordnet ist.

6. Vorrichtung nach einem der vorherigen Ansprüche,
**dadurch gekennzeichnet, daß**
die Vakuumpumpe und die weitere Vakuumpumpe durch eine Vakuumpumpe ersetzt sind.

7. Vorrichtung nach einem der vorherigen Ansprüche,
**dadurch gekennzeichnet, daß**
die erste und zweite Schließvorrichtung durch ein erstes 3/2-Wege-Ventil ersetzt ist.

8. Vorrichtung nach einem der vorherigen Ansprüche,
**dadurch gekennzeichnet, daß**
die weitere erste und weitere zweite Schließvorrichtung durch ein weiteres 3/2-Wege-Ventil ersetzt ist.

9. Vorrichtung nach einem der vorherigen Ansprüche,
**dadurch gekennzeichnet, daß**
die Vorrichtung eine Vorrichtung zum Filtern von Flüssigkeiten ist.

10. Vorrichtung nach Anspruch 9,
**dadurch gekennzeichnet, daß**
beim Filtern von Flüssigkeiten die Schließvorrichtungen und/oder die 3/2-Wege-Ventile so geschaltet sind, daß mit Abscheider evakuiert wird.

11. Vorrichtung nach einem der vorherigen Ansprüche,
**dadurch gekennzeichnet, daß**
die Vorrichtung eine Vorrichtung zum Beseitigen von Flüssigkeiten in einer Unterdruckkammer ist.

12. Vorrichtung nach Anspruch 11,
**dadurch gekennzeichnet, daß**
beim Beseitigen von Flüssigkeiten die Schließvorrichtungen und/oder die 3/2-Wege-Ventile so geschaltet sind, daß ohne Abscheider evakuiert wird.

13. Vorrichtung nach einem der vorherigen Ansprüche,
**dadurch gekennzeichnet, daß**
ein Belüftungsventil an der Unterdruckkammer angeordnet ist.

14. Vorrichtung nach einem der vorherigen Ansprüche,
**dadurch gekennzeichnet, daß**
ein Drosselventil zwischen Belüftungsventil und Unterdruckkammer angebracht ist.

15. Vorrichtung nach einem der vorherigen Ansprüche,
**dadurch gekennzeichnet, daß**
die Vorrichtung eine elektronische Einheit zur Steuerung von Schließvorrichtungen, 3/2-Wege-Ventilen, Belüftungsventil, Drosselventil und/oder Vakuumpumpen umfaßt.

16. Verfahren zur Beseitigung von Flüssigkeitsresten in einer Unterdruckkammer mit den folgenden Schritten:
a) die Unterdruckkammer wird luftdicht abgeschlossen;
b) die Unterdruckkammer wird mit einer Vakuumpumpe verbunden und der Abscheider wird von Unterdruckkammer und Vakuumpumpe abgetrennt;
c) die Vakuumpumpe wird eingeschaltet und die Unterdruckkammer wird abgepumpt.

17. Verfahren nach Anspruch 16,
**dadurch gekennzeichnet, daß**
nach dem Abpumpen die Unterdruckkammer belüftet wird.

18. Verfahren nach Anspruch 16 und 17,
**dadurch gekennzeichnet, daß**
Abpumpen und Belüften mehrfach wiederholt werden.

19. Verfahren nach Anspruch 16 bis 18,
**dadurch gekennzeichnet, daß**
die zu beseitigenden Flüssigkeitsreste Ethanol enthalten.

20. Verfahren nach Anspruch 16 bis 19,
**dadurch gekennzeichnet, daß**
die Flüssigkeitsreste erwärmt werden, um die Verdampfung zu beschleunigen.

21. Verfahren nach Anspruch 16 bis 20,
**dadurch gekennzeichnet, daß**
die Flüssigkeitsreste auf eine Temperatur oberhalb des Siedepunkts geheizt werden.

22. Verfahren nach Anspruch 16 bis 21,
**dadurch gekennzeichnet, daß**
das Verfahren nach Anspruch 16 bis 21 durch eine elektronische Einheit gesteuert wird.

23. Verfahren nach Anspruch 22,
**dadurch gekennzeichnet, daß**
die Beseitigung von Flüssigkeiten nach einem der Verfahren 16 bis 22 durch die elektronische Steuerung automatisch durchgeführt wird.

## Claims

1. An apparatus for filtering and removing liquids in a low-pressure chamber, with a vacuum pump and a separator,
wherein the low-pressure chamber is connected to the separator by means of a first duct, and a first closing device is provided between the low-pressure chamber and the separator,
and wherein the low-pressure chamber is connected to the vacuum pump by means of a second duct,
in order that the low-pressure chamber is able to be evacuated while bypassing the separator.

2. The apparatus according to claim 1,
**characterized in that** the low-pressure chamber is connected to a further vacuum pump via the separator.

3. The apparatus according to claim 2,
**characterized in that** a further first closing device is provided between the separator and the further vacuum pump.

4. The apparatus according to one of the preceding claims,
**characterized in that** a second closing device is provided in the second duct between the low-pressure chamber and the vacuum pump.

5. The apparatus according to claim 4,
**characterized in that** a further second closing device is provided in the second duct.

6. The apparatus according to one of the preceding claims,
**characterized in that** the vacuum pump and the further vacuum pump are replaced by one vacuum pump.

7. The apparatus according to one of the preceding claims,
**characterized in that** the first and second closing devices are replaced by a first 3/2-port-valve.

8. The apparatus according to one of the preceding claims,
**characterized in that** the further first and the further second closing devices are replaced by a further 3/2-port-valve.

9. The apparatus according to one of the preceding claims,
**characterized in that** the apparatus is a device for the filtering of liquids.

10. The apparatus according to claim 9,
**characterized in that** the closing devices and/or the 3/2-port-valves are connected in such a way during filtering of liquids that the evacuation takes place with the separator.

11. The apparatus according to one of the preceding claims,
**characterized in that** the apparatus is a device to remove liquids in a low-pressure chamber.

12. The apparatus according to claim 11,
**characterized in that** the closing devices and/or the 3/2-port-valves are connected in such a way during the removal of liquids that the evacuation takes place without the separator.

13. The apparatus according to one of the preceding claims,
**characterized in that** a ventilation valve is provided on the low-pressure chamber.

14. The apparatus according to one of the preceding claims,
**characterized in that** a regulating valve is provided between the ventilation valve and the low-pressure chamber.

15. The apparatus according to one of the preceding claims,
**characterized in that** the apparatus comprises an electronic unit to control the closing devices, the 3/2-port-valves, the ventilation valve, the regulating valve and /or the vacuum pumps.

16. A method for removing liquid remains in a low-pressure chamber comprising the following steps:
a) the low-pressure chamber is sealed so that it is airtight;
b) the low-pressure chamber is connected to a vacuum pump and the separator is disconnected from the low-pressure chamber and the vacuum pump.
c) the vacuum pump is switched on and the low-pressure chamber is evacuated.

17. The method according to claim 16,
**characterized in that** the low-pressure chamber is aired after being evacuated.

18. The method according to claim 16 and 17,
**characterized in that** the evacuation and the airing are repeated several times.

19. The method according to claim 16 to 18,
**characterized in that** the liquid remains to be removed contain ethanol.

20. The method according to claim 16 to 19,
**characterized in that** the liquid remains are warmed in order to accelerate evaporation.

21. The method according to claim 16 to 20,
**characterized in that** the liquid remains are heated to a temperature above boiling point.

22. The method according to claims 16 to 21,
**characterized in that** the method according to claim 16 to 21 is controlled by an electronic unit.

23. The method according to claim 22,
**characterized in that** the removal of liquids according to one of the methods 16 to 22 is automatically realized by the electronic controlling.

## Revendications

1. Dispositif de filtration et d'élimination de liquides dans une chambre en dépression, comprenant une pompe à vide et un séparateur,
la chambre en dépression communiquant avec le séparateur par un premier conduit et un premier dispositif d'obturation étant interposé entre la chambre en dépression et le séparateur
et dans lequel la chambre en dépression communique avec la pompe à vide par un deuxième conduit,
de sorte que la chambre en dépression peut être mise sous vide en contournant le séparateur.

2. Dispositif suivant la revendication 1,
**caractérisé**
**en ce que** la chambre en dépression communique avec une autre pompe à vide par le séparateur.

3. Dispositif suivant la revendication 2,
**caractérisé**
**en ce qu'**il est monté un autre premier dispositif d'obturation entre le séparateur et l'autre pompe à vide.

4. Dispositif suivant l'une des revendications précédentes,
**caractérisé**
**en ce qu'**il est monté un deuxième dispositif d'obturation dans le deuxième conduit entre la chambre en dépression et la pompe à vide.

5. Dispositif suivant la revendication 4,
**caractérisé**
**en ce qu'**il est monté un deuxième dispositif d'obturation dans le deuxième conduit.

6. Dispositif suivant l'une des revendications précédentes,
**caractérisé**
**en ce que** la pompe à vide et l'autre pompe à vide sont remplacées par une pompe à vide.

7. Dispositif suivant l'une des revendications précédentes,
**caractérisé**
**en ce que** le premier et le deuxième dispositif d'obturation sont remplacés par une première vanne à 3/2 voies.

8. Dispositif suivant l'une des revendications précédentes,
**caractérisé**
**en ce que** l'autre premier et l'autre deuxième dispositif d'obturation sont remplacés par une autre vanne à 3/2 voies.

9. Dispositif suivant l'une des revendications précédentes,
**caractérisé**
**en ce que** le dispositif est un dispositif de filtration de liquides.

10. Dispositif suivant la revendication 9,
**caractérisé**
**en ce que** pour la filtration de liquides, les dispositifs d'obturation et/ou les vannes à 3/2 voies sont montés de manière à ce qu'il y ait une mise sous vide avec le séparateur.

11. Dispositif suivant l'une des revendications précédentes,
**caractérisé**
**en ce que** le dispositif est un dispositif d'élimination de liquides dans une chambre en dépression.

12. Dispositif suivant la revendication 11,
**caractérisé**
**en ce que** lors de l'élimination de liquides, les dispositifs d'obturation et/ou les vannes à 3/2 voies sont montés de manière à ce qu'il y ait une mise sous vide sans séparateur.

13. Dispositif suivant l'une des revendications précédentes,
**caractérisé**
**en ce qu'**une soupape de mise à l'atmosphère est montée sur la chambre en dépression.

14. Dispositif suivant l'une des revendications précédentes,
**caractérisé**
**en ce qu'**une vanne à étranglement est placée entre la soupape de mise à l'atmosphère et la chambre en dépression.

15. Dispositif suivant l'une des revendications précédentes,
**caractérisé**
**en ce que** le dispositif comprend une unité d'électronique de commande de dispositifs d'obturation de vannes à 3/2 voies, d'une soupape de mise à l'atmosphère, d'une vanne à étranglement et/ou de pompes sous vide.

16. Procédé d'élimination de résidus liquides dans une chambre en dépression comprenant les stades suivants :
a) on ferme la chambre en dépression d'une manière étanche à l'air;
b) on met la chambre en dépression en communication avec une pompe à vide et on sépare le séparateur de la chambre en dépression et de la pompe à vide ;
c) on branche la pompe à vide et on évacue par pompage la chambre en dépression.

17. Procédé suivant la revendication 16,
**caractérisé**
**en ce qu'**après avoir vidé la chambre en dépression par pompage on la met à l'atmosphère.

18. Procédé suivant la revendication 16 et 17,
**caractérisé**
**en ce que** l'on vide par pompage et l'on met à l'atmosphère la chambre en dépression plusieurs fois de manière répétée.

19. Procédé suivant la revendication 16 à 18,
**caractérisé**
**en ce que** les restes de liquide à éliminer contiennent de l'éthanol.

20. Procédé suivant la revendication 16 à 19,
**caractérisé**
**en ce que** l'on réchauffe les restes de liquide pour accélérer l'évaporation.

21. Procédé suivant la revendication 16 à 20,
**caractérisé**
**en ce que** l'on porte les restes de liquide à une température supérieure au point d'ébullition.

22. Procédé suivant la revendication 16 à 21,
**caractérisé**
**en ce que** l'on commande le procédé suivant la revendication 16 à 21 par une unité électronique.

23. Procédé suivant la revendication 22,
**caractérisé**
**en ce que** l'on effectue l'élimination de liquide suivant l'un des procédés 16 à 22 automatiquement par la commande électronique.
